# EUROPÄISCHE PATENTANMELDUNG

(11) **EP 2 466 706 A2**
(43) Veröffentlichungstag der Anmeldung: **20.06.2012**
(21) Anmeldenummer: 11191864.5
(22) Anmeldetag: 05.12.2011
(51) Int. Cl.: H02B 13/025

(54) **Schaltschrank zum Betreiben einer Mittel- oder Hochspannungsschaltanlage**

(30) Priorität: 15.12.2010 DE 102010063130
(71) Anmelder: ABB Technology AG, 8050 Zürich (CH)
(72) Erfinder: Sabani, Arben, CH-8046 Zürich (CH); Sologuren-Sanchez, Diego, CH-5430 Wettingen (CH); Tokmakci, Mahmut, CH-8405 Winterthur (CH); Erford, Tobias, 8050 Zürich (CH)
(74) Vertreter: ABB Patent Attorneys

(57) **Zusammenfassung**

Schaltschrank (3a), welcher Mittel zum Betreiben einer Mittel- oder Hochspannungsschaltanlage (1a) aufweist, wobei der Schaltschrank (3a) mindestens eine Steuereinheit (10a, 10b, 10c) zum Betreiben mindestens eines Schaltelementes eines Schalters sowie mindestens eine Antriebseinheit (11a, 11b) mit einem Elektromotor zum Bewegen des mindestens einen Schaltelementes des Schalters umfasst. Die mindestens eine Steuereinheit (10a, 10b, 10c) ist in einem Steuerschrank (20a) und die mindestens eine Antriebseinheit (11a, 11b) in einem räumlich vom mindestens einen Schalter entfernt anordenbaren Antriebsschrank (21a) des Schaltschranks (3a) angeordnet sind. Dabei ist die mindestens eine Antriebseinheit (11a, 11b) über einen räumlich begrenzten Anschlussabschnitt (15) des Schaltschranks (3a) mit der mindestens einen Steuereinheit (10a, 10b, 10c) elektrisch verbindbar. Zumindest 70% aller den Steuerschrank (20a) und den Antriebsschrank (21a) verbindenden elektrischen Verbindungen (14,16a,16b) sind im Anschlussabschnitt (15) des Schaltschranks (3a) zusammengefasst.

## Beschreibung

### TECHNISCHES GEBIET

Die vorliegende Erfindung betrifft einen Schaltschrank zum Betreiben zumindest eines Teils einer Mittel- oder Hochspannungsschaltanlage sowie eine Schaltanlage, insbesondere eine gasisolierten Schaltanlage, mit einem solchen Schaltschrank.

### TECHNOLOGISCHER HINTERGRUND UND STAND DER TECHNIK

Aus dem Stand der Technik sind viele Schaltanlagen, etwa gasisolierte Schaltanlagen (GIS) bekannt, bei welchem jedem Schaltfeld ein eigener Steuerschrank zum Betreiben des Schaltfeldes zugeordnet ist. Je nach Gegebenheiten und Kundenwunsch ist der Steuerschrank nahe beim Schaltfeld angeordnet, etwa zwischen einem Bediengang für einen Bediener oder Techniker der Schaltanlage und dem eigentlichen Schaltfeld oder aber vom Schaltfeld örtlich entfernt untergebracht, beispielsweise in einem Kontrollraum.

Der Schaltschrank enthält mindestens eine Steuereinheit zum Betreiben mindestens eines Schaltelementes eines gasisolierten Schalters. Üblicherweise ist jedem Schalter eine Antriebseinheit mit einem Elektromotor zum Bewegen des mindestens einen Schaltelementes des Schalters zwischen einer ersten Position und einer zweiten Position zugeordnet. Ferner umfasst der Begriff "Betreiben" je nach Bedarf auch die Erfassung der Schaltstellung des Schaltelementes, die Fehlerüberwachung, Schutzmassnahmen und weiteres mehr.

Aus dem Stand der Technik sind viele elektrische Schalter mit beweglichen Schaltelementen bekannt, welches über eine

Antriebseinheit mit einem Elektromotor von einer ersten Position bzw. Schaltstellung ein eine zweite Position bzw. Schaltstellung bewegbar ist. Stellvertretend sind an dieser Stelle die EP1068624B1 oder die EP1569254A1 für eine Vielzahl von gasisolierten Schalter genannt.

Solche Schalter weisen typischerweise ein metallisches Gehäuse auf, an welchem die zum Bewegen des Schaltelementes erforderliche Antriebseinheit befestigt ist.

Wird nun beispielsweise eine gasisolierte Unterstation mit mehreren solchen Schaltern gebildet, dann weist die Unterstation rasch einmal stattliche Dimensionen von mehreren Metern auf, wobei die Schalter an verschiedenen Positionen - sprich geometrischen Orten - in der Unterstation angebracht sind. Je nach Anforderungen sind die Schalter zudem noch unterschiedlich zueinander ausgerichtet.

Vor der ersten Inbetriebsetzung einer solchen Schaltanlage muss die Steuerstromverkabelung und die Überwachungsverkabelung zwischen der mindestens einen Steuereinheit im Steuerstromschrank und meist mehreren Schaltern der Schaltanlage, etwa eines Schaltfeldes, verlegt, angeschlossen und auf deren Funktionstüchtigkeit hin kontrolliert werden. Überdies müssen typischerweise auch etliche zusätzliche Geräte wie ausserhalb des Schaltschranks in der Schaltanlage angeordnete Sensoren zur Überwachung, Steuerung und Regelung der Schaltanlage mit der Steuereinheit im Steuerschrank verbunden werden.

Alles in allem entsteht dadurch ein grosser Verkabelungsaufwand zum Erstellen der elektrischen und/oder elektronischen Verbindungen vor der ersten Inbetriebsetzung einer solchen Schaltanlage. Dieser Aufwand wird im Betrieb der Schaltanlage noch grösser, wenn beispielsweise in der Schaltanlage verbaute Geräte ersetzt oder einer Instandhaltung zugeführt werden müssen, welche geräteseitig bereits über eine feste Kabelkonfektionierung verfügen, deren freies Ende direkt mit einer Steuereinheit im Steuerstromschrank verbunden ist. Letzteres erfordert mitunter oft ein Auseinanderdröseln von vom Schaltschrank zum Einbauort führenden Kabelbäumen, welche je nach Verästelung mitunter einen erheblichen Aufwand zum Entflechten und Auswechseln von Kabelverbindungen dieses Kabelbaumes erfordern.

### ZUSAMMENFASSUNG DER ERFINDUNG

Es ist daher eine Aufgabe der vorliegenden Erfindung, einen Schaltschrank zum Betreiben eines Schalters einer Mittel- oder Hochspannungsschaltanlage sowie eine Schaltanlage mit einem solchen Schaltschrank vorzulegen, mit welchem sich der oben genannte Verkabelungsaufwand im Vergleich zu bekannten Anlagen verringern lässt.

Dieses Ziel wird durch eine Antriebseinheit gemäss Anspruch 1 sowie durch eine Schaltanlage gemäss Anspruch 10 gelöst.

Hinsichtlich der Antriebseinheit wird diese Aufgabe dadurch gelöst, dass der Schaltschrank, welcher Mittel zum Betreiben einer Mittel- oder Hochspannungsschaltanlage aufweist und mindestens eine Steuereinheit zum Betreiben mindestens eines Schaltelementes eines Schalters aufweist, weiter mindestens eine Antriebseinheit mit einem Elektromotor zum Bewegen des mindestens einen Schaltelementes des Schalters umfasst. Dabei ist die mindestens eine Steuereinheit in einem Steuerschrank und die mindestens eine Antriebseinheit in einem räumlich vom mindestens einen Schalter entfernt anordenbaren beziehungsweise angeordneten Antriebsschrank des Schaltschranks angeordnet. Die mindestens eine Antriebseinheit ist über einen räumlich begrenzten Anschlussabschnitt des Schaltschranks mit der mindestens einen Steuereinheit elektrisch und/oder elektronisch verbindbar beziehungsweise verbunden. Im Betriebszustand des Schaltschranks sind zumindest 70% aller elektrischen und/oder elektronischen Verbindungen, welche die mindestens eine Steuereinheit und die mindestens eine Antriebseinheit miteinander verbinden, über den Anschlussabschnitt geführt.

Je nach Anforderungen an den Schaltschrank sind der Steuerschrank und der Antriebsschrank mechanisch als eigenständige oder als nicht oder nur teilweise eigenständige Module ausgeführt. Wenn der Steuerschrank und der Schaltschrank mechanisch als nicht oder nur teilweise eigenständige Module ausgeführt sind, so sind sie etwa in einer übergeordneten mechanischen Struktur - etwa einem gemeinsamen mechanischen Rahmen - befestigbar. Im letzten Fall ist es jedoch wesentlich, dass die Steuereinheiten und die Antriebseinheiten entsprechend ihres Bestimmungszweckes in jeweils eigenen räumlichen Bereichen des Schaltschranks angeordnet sind, so dass die Steuereinheiten und die Antriebseinheiten räumlich in verschiedenen Zonen angeordnet sind und in der Folge keine Verflechtung der elektrischen und/oder elektronischen Verbindungen entsteht.

Unter dem Begriff "Betreiben der Schaltanlage" wird nachfolgend unter anderem ein Steuern, Regeln, Messen, Überwachen, Versorgen des Schalters und/oder der Schaltanlage mit Leistung et cetera verstanden. Entsprechend sind die dazu erforderlichen Mittel beispielsweise Leistungstransformatoren, Einheiten zum Auswerten von Sensorikdaten, Gasdichtewächter, Temperaturfühler, Einheiten zum Auswerten von Endlagendaten vom Schalter, Einheiten zum Auswerten von Positionsdaten des Schaltelementes im Schalter und dergleichen.

Unter dem Begriff "räumlich begrenzt" wird eine örtliche Limitierung auf einen im Vergleich zur Schaltanlage geringen Raum verstanden. Dementsprechend ist dieser Raum ist dimensionsmässig kleiner als der ganze Schaltschrank. Anders ausgedrückt sind die elektrischen und/oder elektronischen Verbindungen im Anschlussabschnitt konzentriert zusammengeführt. Dies ist insofern vorteilhaft, als dass die von der mindestens einen Steuereinheit und je nach Ausgestaltung auch die von der mindestens einen Antriebseinheit zum Anschlussabschnitt geführten elektrischen Leitungen bei Bedarf als vorkonfektionierbare Kabelbäume wirtschaftlich ausserhalb des eigentlichen Aufstellungsortes (Endmontageortes) des Steuerschranks wirtschaftlich vorfertigen lassen. Der Anschlussabschnitt ist eine körperliche Einheit, welche weder von der Antriebseinheit, noch von der Steuereinheit abhängig ist.

Unter dem Begriff "räumlich vom Schalter entfernt angeordnet" wird eine Antriebseinheit verstanden, welche nicht wie bei bekannten Schaltern auf dem Schalter beziehungsweise dem Schaltergehäuse selber aufgebracht ist, sondern beispielsweise in einem davon mehrere Meter entfernten Antriebsschrank der Schaltanlage. Die Kraftübertragung des Motors der Antriebseinheit auf das zu bewegende Schaltelement des räumlich je nach Ausführungsform mehrere Meter entfernt angeordnete Schaltelement eines Schalters erfolgt beispielsweise über eine hydraulische Leitung oder eine mechanische Welle, etwa in Form einer biegsamen Welle.

Unter dem Begriff "elektrische und/oder elektronisch Verbindungen" werden nachfolgend sowohl Primäranschlüsse als auch Sekundärkontakte, sowie Steuerstromkontakte, Sensorikanschlüsse und dergleichen verstanden. Am Beispiel einer gasisolierten Schaltanlage erklärt, könnten elektrische Verbindungen beispielsweise eine Steuerstromverbindung eines Leistungsschalters, eine Steuerstromverbindung eines Erdschalters, eine Steuerstromverbindung eines Trennschalters oder eine Steuerstromverbindung eines einschaltfesten Erdungsschalters umfassen.

Wenn der Steuerschrank und der Antriebsschrank in unterschiedlichen physikalischen Einheiten untergebracht sind, so lassen sich diese unabhängig voneinander an unterschiedlichen Orten zusammenstellen, montieren und Vorprüfen. Dies ist insofern von Vorteil, als dass der Steuerschrank und der Antriebsschrank eigenständige Module sind, die vom Aufbau und den durch die in sie eingebauten Geräte weitestgehend unabhängig voneinander sind. Wenn der Steuerschrank und der Antriebsschrank in unterschiedlichen physikalischen Einheiten, sprich eigenständigen mechanischen Modulen, untergebracht sind, sind etwa im Schadenfall der Steuerschrank oder dessen Steuereinheiten sowie der Antriebsschrank oder dessen Antriebseinheiten vollständig austauschbar, ohne dass dazu die bestehende Verkabelung von elektrischen und/oder elektronischen Verbindungen des Schaltschranks zumindest zu weiten Teilen entflochten werden muss, um zu den entsprechenden Verbindungskabeln zu gelangen.

Je nach Bedarf ist der Steuerschrank nahe beim Schaltfeld anordenbar, etwa zwischen einem Bediengang für einen Bediener oder Techniker der Schaltanlage und dem eigentlichen Schaltfeld oder aber örtlich vom Schaltfeld entfernt untergebracht, beispielsweise auf einer dem Schaltfeld gegenüberliegenden Seite eines Bediengangs oder in einem Kontrollraum.

Wenn der Verkabelungsaufwand weiter gesenkt werden soll, so ergeben sich die Vorteile analog der oben genannten Ausführungsform, wenn zumindest 70% aller weiteren elektrischen und/oder elektronischen Verbindungen (23), welche von der mindestens einen Steuereinheit zu ausserhalb des Schaltschranks anordenbaren Geräten der Mittel- oder Hochspannungsschaltanlage führbar sind, ebenfalls über den Anschlussabschnitt des Schaltschranks führen beziehungsweise geführt sind. Unter dem Begriff ,,Geräte" werden wie oben erklärt etwa Überwachungsgeräte, beispielsweise Gasdrucksensoren in einer GIS, verstanden.

Um die Bedienerfreundlichkeit weiter zu verbessern, können eine Mehrheit aller elektrischen und/oder elektronischen Verbindungen und/oder weiteren Verbindungen im Anschlussabschnitt über mindestens einen Stecker und mindestens eine Steckdose lösbar miteinander verbindbar beziehungsweise verbunden sein. Bei mehreren Steuereinheiten und Antriebseinheiten empfiehlt sich die Aufteilung der Verbindungen in mehrere Steckverbindungen.

In einer Basisausführungsform des Anschlussabschnitts weist dieser einen Grundkörper auf, welcher eine erste Ebene definiert. Dies ist beispielsweise bei blechernen Grundkörpern interessant, da sich planare Grundkörper sehr einfach und wirtschaftlich herstellen lassen. Bei Bedarf kann der Grundkörper auch mehrere Ebenen aufweisen, etwa er mittels Blechbiegeverarbeitung hergestellt worden ist. Ein metallischer Anschlussabschnitt kann beispielsweise dann weiter vorteilhaft sein, wenn gewisse Geräte, beispielsweise der Steuereinheit, von schädlichen elektromagnetischen Strahlen geschützt werden soll.

In einer alternativen Ausführungsform des Anschlussabschnitts ist der Grundkörper mehrteilig oder kann eine Vielzahl von an ihm befestigten Formteilen aufweisen, so dass der Anschlussabschnitt eine eigenständige Baugruppe bildet.

Je nach Bedarf kann der Anschlussabschnitt zumindest partiell in den Steuerschrank oder den Antriebsschrank integriert sein. In einer Ausführungsform des Schaltschranks ist der Anschlussabschnitt beispielsweise als Deckel des Antriebsschranks ausgeführt und fest mit Letzterem verschraubt. Alternativ oder in Kombination dazu kann der Anschlussabschnitt in einem peripheren Abschnitt des Steuerschranks oder des Antriebsschranks angeordnet sein.

Wenn der Steuerschrank direkt am Antriebsschrank befestigt werden soll, so kann der Anschlussabschnitt beispielsweise gleich in einen Boden oder einen Deckel des Steuerschranks oder des Antriebsschranks integriert oder sogar als Boden oder einen Deckel ausgebildet sein.

Falls erforderlich, lässt sich ein Innenraum des Steuerschranks durch den Anschlussabschnitt gleichzeitig räumlich zumindest partiell von einem Innenraum des Antriebschranks abtrennen, wenn der Steuerschrank am Antriebsschrank befestigt ist.

Je nach Ausführungsform des Schaltschranks kann der Anschlussabschnitt mindestens einen Durchbruch aufweisen, welcher den Steuerschrank und den Antriebsschrank derart miteinander verbindet, dass im Betrieb des im Wesentlichen hermetisch geschlossenen Schaltschranks eine Innentemperatur des Steuerschranks und der Antriebsschrank mittels eines gemeinsamen Luftstromes steuerbar oder regelbar ist. Eine derartige Ausführungsform ist etwa dann vorteilhaft, wenn mit einem gemeinsam genutzten Heizwiderstand auf einer minimalen Betriebstemperatur gehalten werden soll. Falls eine automatische elektrische Kontaktierung der elektrischen und/oder elektronischen Verbindungen zwischen Steuerschrank und Antriebsschrank realisiert werden soll, dann ist der Anschlussabschnitt beispielsweise derart als elektrische Kupplung ausgeführt, dass beim einem Anstecken des Steuerschranks an den Antriebsschrank der Anschlussabschnitt die mindestens eine Steuereinheit selbsttätig mit der mindestens einen Antriebseinheit elektrisch und/oder elektronisch miteinander verbunden werden. Eine automatische elektrische und/oder elektronische Kupplung der elektrischen und/oder elektronischen Verbindungen ist zudem weitestgehend fehlerfrei. Sollte die zum Zusammenkuppeln und/oder zum Entkuppeln erforderliche Kraft einen Schwellwert übersteigen, so kann eine Verriegelungshilfe zum Aufbringen der erforderlichen Kraft, beispielsweise in Form eines Kniehebelmechanismus vorgesehen werden, um den Steuerschrank am Antriebsschrank zu befestigen. Falls erforderlich können Zentrierelemente am Anschlussabschnitt und/oder am Steuerschrank oder am Antriebsschrank, etwa in Form eines Zentrierdorns, ein korrektes mechanisches Befestigen des Steuerschranks am Antriebsschrank erleichtern.

Eine im Betriebszustand mehrteilige Variante des Schaltschranks kann je nach Anforderungen an den Schaltschrank hinsichtlich eines möglichst idealen Verkabelungsaufwandes dennoch gebildet werden, wenn die Antriebseinheit mindestens einen Kabelschacht zur Aufnahme eines Verbindungskabels umfasst, welches welche die mindestens eine Steuereinheit und die mindestens eine Antriebseinheit elektrisch und/oder elektronisch miteinander verbindet, wenn der Steuerschrank im Betrieb des Schaltschranks räumlich vom Antriebsschrank entfernt angeordnet ist.

Wenn der mindestens eine Kabelschacht in einem Wandabschnitt des Antriebsschranks angeordnet ist oder zumindest partiell oder sogar ganz in einem Wandabschnitt des Antriebsschranks integriert sind, so ist etwa insbesondere dann eine ideale Kabelverlegung zwischen Steuerschrank im Betrieb des Schaltschranks erzielbar, wenn Letztere räumlich vom Antriebsschrank entfernt angeordnet ist.

Wenn beispielsweise derselbe Antriebsschrank sowohl direkt am Steuerschrank, als auch separat vom Steuerschrank anordenbar sein soll, kann der bedienerfreundlich ausgerichtete Anschlussabschnitt unabhängig von der Aufstellungsart des Steuer- und Antriebsschrank am geometrisch gleichen Ort liegen. Ist der Antriebsschrank örtlich entfernt vom Steuerschrank angeordnet, beispielsweise auf einer dem Antriebsschrank gegenüberliegenden Seite des Bediengangs, so können alle vom Anschlussabschnitt wegführenden Kabel und Leitungen - sprich die elektrischen und/oder elektronischen Verbindungen - durch den oder die oben genannten Kabelschächte geführt werden, von wo sie an ihren Bestimmungsort, etwa zum Steuerschrank oder zum Schaltfeld weitergeführt werden. Allfällige Kabelschlaufen können dabei mit einer hutzenartigen Abdeckung vor unerwünschten mechanischen Einwirkungen geschützt werden. Die Abdeckung deckt in diesem Fall den Anschlussabschnitt nach aussen hin ab.

Durch eine Anordnung und Ausgestaltung der elektrischen und/oder elektronischen Verbindungen und/oder weiteren elektrischen und/oder elektronischen Verbindungen im Anschlussabschnitt sowohl im ersten Aufstellungsfall, wo der Steuerschrank im Betrieb des Schaltschranks räumlich vom Antriebsschrank entfernt angeordnet ist, als auch im zweiten Aufstellungsfall, wo der Steuerschrank am Antriebsschrank befestigt ist, gleich ist, ergeben sich weitere Vorteile. Unter Anordnung und Ausgestaltung wird die Disposition und das Layout verstanden. Wenn mit einem standardisierten Anschlussabschnitt alle Einbau- und Aufstellungsvarianten erreichen lassen, ergeben sich daraus weitere wirtschaftliche Vorteile.

Hinsichtlich der Schaltanlage wird die Aufgabe durch eine erfindungsgemässe, oben beschriebene Ausführungsform des Schaltschranks gelöst. Bezüglich der sich daraus ergebenden Vorteile für die Schaltanlage wird deshalb an dieser Stelle auf die oben genannten Vorteile des Schaltschranks verwiesen. Der Schaltschrank dient zum Betreiben mindestens eines Schaltelementes von mindestens einem Schalter, in Ausführungsformen eines gasisolierten Schalters. Der Schaltschrank ist mit mindestens einem Schalter zum Überführen eines Schaltelementes des Schalters von einer ersten Position in eine zweite Position verbunden, wobei die Antriebseinheit räumlich vom Schalter entfernt angeordnet ist. Unter dem Begriff "räumlich vom Schalter entfernt angeordnet" wird eine Antriebseinheit verstanden, welche nicht auf dem Schalter beziehungsweise dem Schaltergehäuse selber aufgebracht ist, sondern beispielsweise in einem davon mehrere Meter entfernten Schaltschrank der Schaltanlage.

Wenn die Schaltanlage als gasisolierte Schaltanlage mit einer Antriebseinheit gemäss oben genannten Ausführungsformen ausgeführt ist, und der Schalterantrieb eine mechanische Kupplung zur Abgabe eines über den Elektromotor erzeugbaren Drehmomentes über eine mechanische Welle, insbesondere eine flexible Welle, an den Schalter aufweist, ergeben sich weitere Vorteile in punkto des Freiheitsgrades beim Schaltanlagendesign.

Obwohl die oben genannte Erfindung am Beispiel einer gasisolierten Schaltanlage (GIS) erklärt worden ist, ist die Erfindung dementsprechend auch für Dead Tank Breaker (DTB), Live Tank Breaker (LTB) und luftisolierte Schaltanlagen (AIS) entsprechend einsetzbar.

### KURZE BESCHREIBUNG DER ZEICHNUNG

In der Zeichnung sind Ausführungsbeispiele der Erfindung rein schematisch dargestellt. Dabei zeigt:
- Fig. 1: eine Seitenansicht einer gasisolierten Schaltanlage mit einem Schalter und einer ersten Ausführungsform eines Schaltschrankes;
- Fig. 2: eine Teilansicht einer gasisolierten Schaltanlage mit einer zweiten Ausführungsform eines Schaltschrankes; und
- Fig. 3: eine isolierte, räumliche Darstellung einer dritten Ausführungsform eines Schaltschrankes mit einem vom Antriebsschrank angehobenem Steuerschrank.

### WEGE ZUR AUSFÜHRUNG DER ERFINDUNG

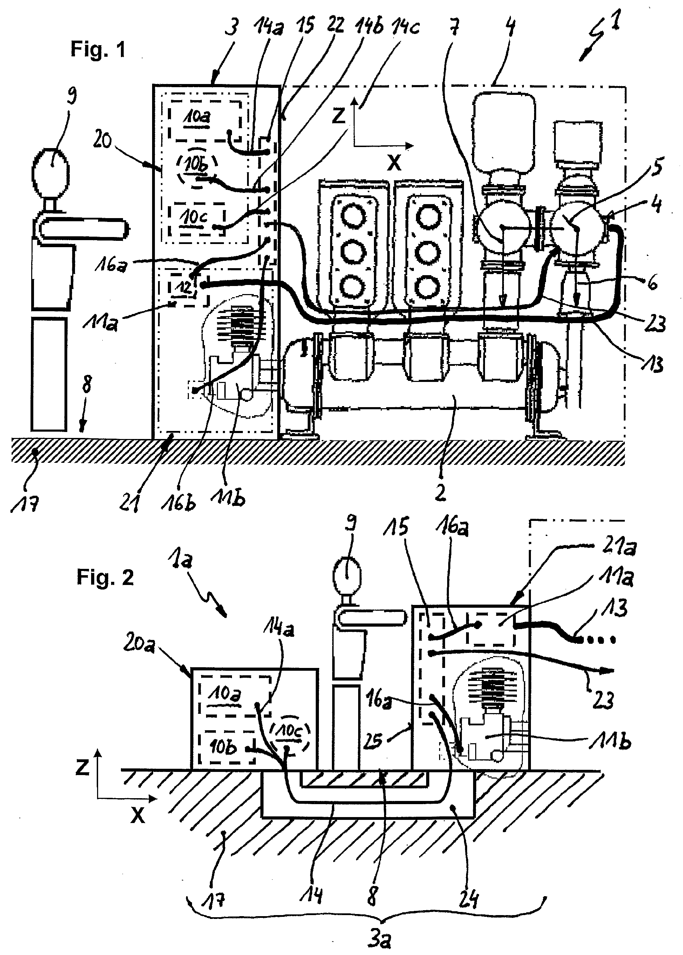

Die in **Figur 1** dargestellte erste Ausführungsform einer erfindungsgemässen gasisolierten Schaltanlage 1 mit einem sich in horizontaler Richtung (X) erstreckenden Leistungsschalter 2 und einem stirnseitig dazu angeordneten Schaltschrank 3. Die Schaltanlage ist innerhalb eines mit einer strichpunktierten Linie angedeuteten Bauraums angeordnet und umfasst mindestens einen gasisolierten Schalter 4 mit mindestens einem beweglichen Schaltelement 5 auf. Je nach Schaltstellung unterbricht oder verbindet das bewegliche Schaltelement 5 einen ersten Leiterabschnitt 6 mit einem zweiten Leiterabschnitt 7 der Schaltanlage 1. Die Leiterabschnitte 6, 7 und das Schalterinnere sind lediglich stilisiert dargestellt. Der Schalter 4 ist in dieser Ausführungsform der Schaltanlage 1 ein Trennschalter.

Links vom Schaltschrank 3 ist ein sich in Y-Richtung erstreckender Bediengang 8 für einen Bediener oder Techniker 9 angeordnet. Der Bediengang 8 und die Schaltanlage 1 selber stehen auf einem soliden Untergrund 17.

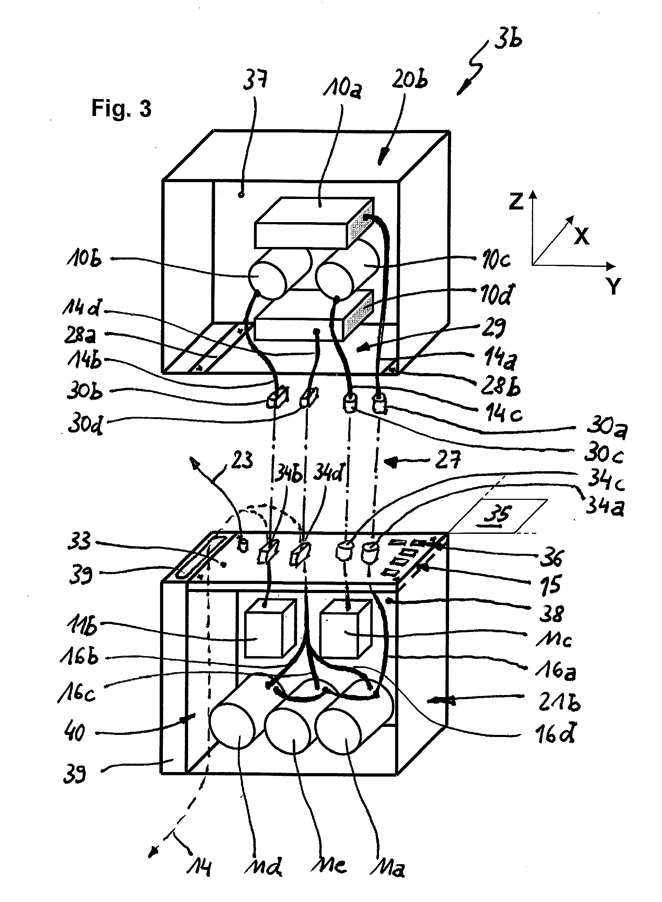

Der Schaltschrank 3 umfasst mehrere Steuereinheiten 10a, 10b, 10c zum Betreiben der Schaltanlage 1, sowie mehrere Antriebseinheiten 11a, 11b, 11c, 11d, 11e, wobei die drei Letztgenannten nur in Zusammenschau mit Figur 3 erkennbar sind. Die Steuer- und Antriebseinheiten sind in Figur 1 strichpunktiert dargestellt. Die Antriebseinheit 11b dient zum Bewegen mindestens eines Schaltelementes des Leistungsschalters 3. Die Antriebseinheit 11b ist zum besseren Verständnis des Lesers durch eine partiell ausgebrochene Schrankwand des Antriebsschranks 21 deutlicher sichtbar. Die Antriebseinheit 11a dient unter anderem zum Überführen des mindestens einen Schaltelementes 5 des mindestens einen Schalters 4 von einer ersten Position in eine zweite Position. Die Antriebseinheit 11a weist einen Schalterantrieb 12 mit einem Elektromotor auf, welcher räumlich vom eigentlichen Schalter 4 entfernt nahe beim Bediengang 8 angeordnet ist.

Der Elektromotor des Schalterantriebs 12 wirkt hier über eine biegsame mechanische Welle 13 auf das bewegliche Schaltelement 5 ein.

Die Steuereinheiten 10a, 10b, 10c sind jeweils über erste Kabel 14a, 14b, 14c mit einem Anschlussabschnitt 15 elektrisch verbunden. Unter dem Begriff "erste Kabel" wird dabei sowohl die Einzahl, wie auch der Plural einer elektrischen oder elektronischen Verbindungsleitung subsumiert.

Die Steuereinheiten 10a, 10b, 10c und der Anschlussabschnitt 15 sind in einem Steuerschrank 20 angeordnet und mit diesem mechanisch verbunden. Elektrisch beziehungsweise elektronisch sind die Antriebseinheiten 11a, 11b, 11c über zweite Kabel 16a, 16b mit dem Anschlussabschnitt 15 verbunden. Die Gesamtheit der ersten Kabel 14a, 14b, 14c und zweiten Kabel 16a, 16b wird nachfolgend pauschal auch als elektrische und/oder elektronische Verbindungen 27 genannt.

Der Steuerschrank 20 und der Antriebsschrank 21 sind mechanisch als nicht oder nur teilweise eigenständige Module ausgeführt, da sie in einer übergeordneten mechanischen Struktur des Schaltschranks 3 beziehungsweise dessen mechanischen Rahmen befestigt sind. Die Steuereinheiten und die Antriebseinheiten sind jedoch entsprechend ihres Bestimmungszweckes in jeweils eigenen räumlichen Bereichen des Schaltschranks 3 angeordnet, so dass keine Verflechtung der elektrischen und/oder elektronischen Verbindungen entsteht.

Die Antriebseinheiten 11a, 11b, 11c, 11d, 11e sind in einem Antriebsschrank 21 angeordnet und mit diesem mechanisch verbunden. Der Antriebsschrank 21 und der Steuerschrank 20 verfügen beide über eine eigene mechanische Struktur, welche zumindest teilweise in die mechanische Struktur der die Beiden umgebenden Schaltschranks 3 integriert ist. Alternativ dazu sind Ausführungsformen von Schaltschränken möglich, bei welchen der Antriebsschrank 21 und der Steuerschrank 20 beide über eine eigene mechanische Struktur verfügen, welche zu einem einteiligen Schaltschrankblock zusammenfügbar sind.

Der Anschlussabschnitt 15 ist an einer Innenseite einer dem Schaltfeld zugewandten Rückwand 22 des Steuerschrankes 20 befestigt. Eine weitere elektrische und/oder elektronische Verbindung in Form einer Sensorikleitung 23 (Messleitungskabel) dient zum Übermitteln von elektronischen Signalen eines am Schalter 4 angebrachten Sensors zum Anschlussabschnitt 15 und von dort zur Auswertung weiter über ein erstes Kabel 14a zu einer dem Sensor zugeordneten Auswerteeinheit in der Steuereinheit 10a.

Damit ist eine Mehrheit aller den Steuerschrank 20 und den Antriebsschrank 21 verbindenden elektrischen Verbindungen 14a,14b,14c,16a,16b sowie vom Schaltfeld her kommenden Leitungen/Kabel 23, welche die elektrischen und/oder elektronischen weiteren Verbindungen bilden, örtlich im Anschlussabschnitt 15 des Schaltschranks 3 zusammengefasst.

Die in **Figur 2** gezeigte alternative zweite Ausführungsform des Schaltschrankes 3 ist in gleicher Darstellung wie in Figur 1 dargestellt um die Unterschiede klarer zu illustrieren. Aufgrund der Ähnlichkeit der zweiten Ausführungsform des Schaltschrankes 3 zur in Figur 1 gezeigten ersten Ausführungsform des Schaltschrankes 3 wird nachfolgend nur auf die Unterschiede der zweiten Ausführungsform bezüglich der ersten Ausführungsform näher eingegangen. Entsprechend sind denn gleiche oder gleich wirkende Teile auch mit identischen Bezugszeichen oder ähnlichen versehen.

Im Unterschied zur Figur 1 weist die zweite Ausführungsform des Schaltschranks 3a je einen Steuerschrank 20a und einen Antriebsschrank 21a auf, welche beide über eine eigene mechanische Struktur verfügen und daher jeweils mechanisch eigenständige Module sind.

Der Antriebsschrank 21a ist in diesem Ausführungsbeispiel auf einer dem Steuerschrank 20a gegenüberliegenden Seite des Bediengangs 8 angeordnet. Unterhalb des Bediengangs 8 erstreckt sich im Untergrund 17 eine Kabelwanne 24, in welchem die ersten Kabel 14 von den Steuereinheiten 10a, 10b, 10c zum Anschlussabschnitt 15 im Antriebsschrank 15 geführt sind. Um für den Bediener 9 eine möglichst bedienerfreundliche Zugänglichkeit zu den Anschlüssen der elektrischen und/oder elektronischen Verbindungen 14, 16a, 16b, 23 des Anschlussabschnitts zu schaffen, ist die Anschlussabschnitt 15 an einer dem Bediengang 8 zugewandten Innenwand 25 des Antriebsschranks 21a angeordnet. Zweite Kabel 16a, 16b verbinden die Antriebseinheiten 11a, 11b elektrisch und/oder elektronisch mit dem Anschlussabschnitt 15.

Eine dritte Ausführungsform eines Schaltschrankes wird nachfolgend anhand der **Figur 3** erklärt. Diese Figur zeigt einen vom Antriebsschrank 21b, welcher lediglich zu Illustrationszwecken gegenüber dem Steuerschrank 20b angehoben ist. Im betriebsbereiten Zustand ist der Steuerschrank 20b über Befestigungsmittel 26 fest mit dem Antriebsschrank 21b verbunden. Zum Erhöhen der Präzision beim Montieren des Steuerschrank 20b auf dem Antriebsschrank 21b kann bei Bedarf mindestens ein Zentrierelement, beispielsweise ein Zentrierdorn vorgesehen werden.

Aufgrund der Ähnlichkeit der dritten Ausführungsform des Schaltschrankes 3b zur in Figur 1 gezeigten ersten Ausführungsform des Schaltschrankes 3 wird nachfolgend nur auf die Unterschiede der dritten Ausführungsform bezüglich der ersten Ausführungsform näher eingegangen. Entsprechend sind denn gleiche oder gleich wirkende Teile auch mit identischen Bezugszeichen oder ähnlichen versehen.

Anhand der dritten Ausführungsform des Schaltschrankes 3b wird nachfolgend detaillierter auf die Gestaltung der elektrischen und/oder elektronischen Verbindungen 27 im Bereich des Anschlussabschnittes 15 Bezug genommen.

Mechanisch ist der Steuerschrank 20b ein blecherner Kubus, welcher in X-Richtung - also in Richtung des Bediengangs - mit einer nicht gezeigten Abdeckung oder einer Schranktür verschliessbar ist. In Z-Richtung ist der Steuerschrank 20b mit Ausnahme von Abstützzonen 28a, 28b gegen den Antriebsschrank 21b hin im Wesentlichen offen. Durch eben diese Öffnung 29 im Steuerschrank 20b baumeln im gezeigten Zustand die von den Steuereinheiten 10a, 10b, 10c, 10d, 10e herkommenden ersten Kabel 14a, 14b, 14c, 14d, 14e, welche an deren freien Enden je einen Stecker 30a, 30b, 30c, 30d aufweisen. Diese Stecker 30a, 30b, 30c, 30d passen zu entsprechenden Steckdosen 34a, 34b, 34c, 34d (mit strichpunktierten und mit Verbindungen 27 gekennzeichneten Linien angedeutet) des Antriebsschrankes 21b, auf welche noch gesondert eingegangen werden wird.

Mechanisch ist der Antriebsschrank 21b ebenfalls ein blecherner Kubus, welcher standseitig in Z-Richtung je nach Bedarf offen oder geschlossen ist. In Richtung des Steuerschrankes 20b ist der Antriebsschrank 21b durch den Anschlussabschnitt 15 verschlossen. Der blecherne Anschlussabschnitt 15 bildet einen Grundkörper 33 welcher sich planar in einer ersten Ebene 35 erstreckt und einen Steuerschrankinnenraum 37 partiell von einem Antriebsschrankinnenraum 38 abtrennt. Von den im Antriebsschrank 21b angeordneten Antriebseinheiten 11a, 11b, 11c, 11d, 11e ist jede direkt oder indirekt mit einem zweiten Kabel 16a, 16b, 16c, 16d über die ihr zugeordnete Steckdosen 34a, 34b, 34c, 34d angeschlossen. Der Anschlussabschnitt 15 weist nebst den an ihm befestigten Steckdosen 34a, 34b, 34c, 34d noch Aussparungen 36 auf, welche einen Steuerschrankinnenraum 37 mit einem Antriebsschrankinnenraum 38 verbinden, um eine gemeinsame Temperierung der Schrankinnenräume 37, 38 mit einem nicht näher dargestellten Kühl-/Heizaggregat zu ermöglichen.

In dieser dritten Ausführungsform des Schaltschranks 3b sind der Steuerschrank 20b und der Antriebsschrank 21b mechanisch als eigenständige Module ausgeführt.

Nach dem mechanischen Verbinden des Steuerschranks 20b am Antriebsschrank 21b kann der Bediener vom Bediengang her bequem die Stecker 30a, 30b, 30c, 30d mit den entsprechenden Steckdosen 34a, 34b, 34c, 34d verbinden und auf diese Weise rasch eine zuverlässige elektrische und/oder elektronischen Verbindung erwirken.

Wenn der gleiche Antriebsschrank 21b mit dem Anschlussabschnitt 15 gemäss der dritten Ausführungsform des Schaltschrankes 3b auch für eine Aufstellungsanordnung gemäss Figur 2 eingesetzt werden soll, so können die gestrichelt dargestellten ersten Kabel alternativ in einem peripheren Abschnitt des Antriebsschranks 21b durch einen in Y-Richtung gesehen seitlich am Antriebsschrank 21b entlang führenden Kabelschacht 39 geführt werden, so dass eine Verflechtung der ersten Kabel und der zweiten Kabel im Antriebsschrankinnenraum 38 elegant vermeidbar ist. Alternativ zum in den in einen Wandabschnitt des Antriebsschranks 21b integrierten Kabelschachts 39 kann bei Bedarf ein am Wandabschnitt 40 befestigter Kabelkanal die Aufgabe des Kabelschachts 39 übernehmen.

### BEZUGSZEICHENLISTE

- 1, 1a, 1b: Schaltanlage
- 2: Leistungsschalter
- 3,3a,3b: Schaltschrank
- 4: Schalter
- 5: bewegliches Schaltelement
- 6: erster Leiterabschnitt
- 7: zweiter Leiterabschnitt
- 8: Bediengang
- 9: Bediener / Techniker
- 10a, 10b, 10c, 10d, 10e: Steuereinheit
- 11a, 11b, 11c, 11d, 11e: Antriebseinheit
- 12: Schalterantrieb
- 13: Biegsame Welle
- 14a,14b,14c,14d: Erstes Kabel
- 15: Anschlussabschnitt
- 16a,16b,16c,16d: Zweites Kabel
- 17: Untergrund
- 20,20a,20b: Steuerschrank
- 21,21a,21b: Antriebsschrank
- 22: Rückwand
- 23: Sensorikleitung
- 24: Kabelwanne
- 25: Innenwand
- 26: Befestigungsmittel
- 27: Elektrische/elektronische Verbindungen
- 28a,28b: Abstützzone
- 29: Öffnung
- 30a,30b,30c,30d: Stecker
- 33: Grundkörper
- 34a,34b,34c,34d: Steckdose
- 35: Erste Ebene
- 36: Aussparung
- 37: Innenraum des Steuerschrankes
- 38: Innenraum des Antriebsschrankes
- 39: Kabelschacht
- 40: Wandabschnitt

## Patentansprüche

1. Schaltschrank (3,3a,3b), welcher Mittel zum Betreiben einer Mittel- oder Hochspannungsschaltanlage (1,1a) aufweist, wobei der Schaltschrank (3,3a,3b) mindestens eine Steuereinheit (10a,10b,10c,10d,10e) zum Betreiben mindestens eines Schaltelementes (5) eines Schalters (4) sowie mindestens eine Antriebseinheit (11a, 11b, 11c, 11d, 11e) mit einem Elektromotor zum Bewegen des mindestens einen Schaltelementes (5) des Schalters (4) umfasst, **dadurch gekennzeichnet, dass** die mindestens eine Steuereinheit (10a,10b,10c,10d,10e) in einem Steuerschrank (20,20a,20b) und die mindestens eine Antriebseinheit (11a, 11b, 11c, 11d, 11e) in einem räumlich vom mindestens einen Schalter (4) entfernt anordenbaren Antriebsschrank (21,21a,21b) des Schaltschranks (3,3a,3b) angeordnet ist, wobei die mindestens eine Antriebseinheit (11a, 11b, 11c, 11d, 11e) über einen räumlich begrenzten Anschlussabschnitt (15) des Schaltschranks (3,3a,3b) mit der mindestens einen Steuereinheit (10a,10b,10c,10d,10e) elektrisch und/oder elektronisch verbindbar ist, und wobei im Betriebszustand des Schaltschranks (3,3a,3b) zumindest 70% aller elektrischen und/oder elektronischen Verbindungen (14a, 14b, 14c, 14d, 16a, 16b, 16c, 16d, 16e) , welche die mindestens eine Steuereinheit (10a,10b,10c,10d,10e) und die mindestens eine Antriebseinheit (11a, 11b, 11c, 11d, 11e) miteinander verbinden, über den Anschlussabschnitt (15) geführt sind.

2. Schaltschrank gemäss Anspruch 1, **dadurch gekennzeichnet, dass** zumindest 70% aller weiteren elektrischen und/oder elektronischen Verbindungen (23), welche von der mindestens einen Steuereinheit (10a,10b,10c,10d, 10e) zu ausserhalb des Schaltschranks (3,3a,30b) anordenbaren Geräten der Mittel- oder Hochspannungsschaltanlage (1,1a) führbar sind, ebenfalls über den Anschlussabschnitt (15) des Schaltschranks (3,3a) führen und/oder eine Mehrheit aller elektrischen und/oder elektronischen Verbindungen (14a,14b,14c,14d,16a,16b, 16c,16d) und/oder weiteren Verbindungen (23) im Anschlussabschnitt (15) über mindestens einen Stecker (30a,30b,30c,30d) und mindestens eine Steckdose (34a,34b, 34c,34d) lösbar miteinander verbindbar sind.

3. Schaltschrank gemäss Anspruch 1 oder 2, **dadurch gekennzeichnet, dass** der Anschlussabschnitt (15) einen Grundkörper (33) aufweist, welcher eine erste Ebene (35) definiert.

4. Schaltschrank gemäss einem der vorangegangenen Ansprüche, **dadurch gekennzeichnet, dass** der Anschlussabschnitt (15) zumindest partiell in den Steuerschrank (20) oder den Antriebsschrank (20a,20b) integriert ist und/oder in einem peripheren Abschnitt des Steuerschranks oder des Antriebsschranks angeordnet ist.

5. Schaltschrank gemäss einem der vorangehenden Ansprüche, **dadurch gekennzeichnet, dass** der Anschlussabschnitt (15) einen Innenraum (37) des Steuerschranks räumlich zumindest partiell von einem Innenraum (38) des Antriebschranks abtrennt, wenn der Steuerschrank (20b) am Antriebsschrank (21b) befestigt ist.

6. Schaltschrank gemäss Anspruch 5, **dadurch gekennzeichnet, dass** der Anschlussabschnitt (15) derart als elektrische Kupplung ausgeführt ist, dass beim einem Anstecken des Steuerschranks an den Antriebsschrank der Anschlussabschnitt die mindestens eine Steuereinheit selbsttätig mit der mindestens einen Antriebseinheit elektrisch und/oder elektronisch miteinander verbunden werden.

7. Schaltschrank gemäss einem der Ansprüche 1 bis 5, **dadurch gekennzeichnet, dass** die Antriebseinheit (21a, 21b) mindestens einen Kabelschacht (39) zur Aufnahme einer elektrischen und/oder elektronischen Verbindung (14a,14b,14c) umfasst, welche die mindestens eine Steuereinheit (10a,10b,10c) und die mindestens eine Antriebseinheit (11a, 11b) miteinander verbindet, wenn der Steuerschrank (20a) im Betrieb des Schaltschranks (3a) räumlich vom Antriebsschrank (21a) entfernt angeordnet ist.

8. Schaltschrank gemäss Anspruch 7, **dadurch gekennzeichnet, dass** der mindestens eine Kabelschacht (39) in einem Wandabschnitt (40) des Antriebsschranks (21b) angeordnet ist, in Ausführungsformen zumindest partiell in einem Wandabschnitt (40) des Antriebsschranks (21b) integriert.

9. Schaltschrank gemäss einem der vorangegangenen Ansprüche, **dadurch gekennzeichnet, dass** eine Anordnung und Ausgestaltung der elektrischen und/oder elektronischen Verbindungen (14a,14b,14c,14d;16a,16b,16c,16d) und/ oder weiteren elektrischen und/oder elektronischen Verbindungen (23) im Anschlussabschnitt (15) sowohl im ersten Aufstellungsfall, wo der Steuerschrank (20a) im Betrieb des Schaltschranks (3a) räumlich vom Antriebsschrank (21a) entfernt angeordnet ist, als auch im zweiten Aufstellungsfall, wo der Steuerschrank (20b) am Antriebsschrank (21b) befestigt ist, gleich ist.

10. Schaltanlage (1,1a), insbesondere eine gasisolierte Schaltanlage, mit einem Schaltschrank (3,3a,3b) gemäss einem der vorangegangenen Ansprüche zum Betreiben mindestens eines Schaltelementes (5) von mindestens einem Schalter (4), insbesondere mindestens eines gasisolierten Hoch- oder Mittelspannungsschalters (4), wobei die Antriebseinheit (11a, 11b, 11c, 11d, 11e) räumlich vom mindestens einen Schalter (4) entfernt angeordnet ist.
